# EUROPEAN PATENT APPLICATION

(11) **EP 4 564 795 A1**
(43) Date of publication of application: **04.06.2025**
(21) Application number: 23846372.3
(22) Date of filing: 20.07.2023
(51) Int. Cl.: H04N 1/00, B41J 29/42, B41J 29/46, G03G 21/00, G10L 15/22

(54) **IMAGE FORMATION DEVICE**

(30) Priority: 29.07.2022 JP 2022121283
(71) Applicant: KYOCERA Document Solutions Inc., Osaka-shi, Osaka, 540-8585 (JP)
(72) Inventor: SAKAGUCHI Shoichi, Osaka-shi, Osaka 540-8585 (JP); SAKASHITA Fumiya, Osaka-shi, Osaka 540-8585 (JP); TAKADA Junpei, Osaka-shi, Osaka 540-8585 (JP); HIROBE Yumi, Osaka-shi, Osaka 540-8585 (JP); FUJIKAWA Takuma, Osaka-shi, Osaka 540-8585 (JP)
(74) Representative: BRP Renaud & Partner mbB Rechtsanwälte Patentanwälte Steuerberater
(86) International application number: PCT/JP2023/026673
(87) International publication number: WO 2024/024641

(57) **Abstract**

An image forming apparatus (1) includes a display device (473), a display controller (101), a microphone (2), a receiver (103), and a controller (100). In a case where a voice instruction is input to the microphone (2) when the display device (473) is caused to display a selection screen, the display controller (101) causes a display screen of the display device (473) to transition from a selection screen (SC1) to a setting screen (SC2) for receiving an input of setting values indicated by the voice instruction and causes a setting screen (SC2) to display the setting values indicated by the voice instruction.

## Description

### [Technical Field]

The present invention relates to an image forming apparatus that allows voice instructions.

### [Background Art]

Some image forming apparatuses such as copy machines and multi-functional machines include operation panels for users to perform manual input operations. A user can select one function from among a plurality of functions (such as a copy function, a scanner function, and a facsimile function, for example) and perform setting for the function by performing operations via the operation panels.

Also, various image forming apparatuses that allow voice instructions have been proposed and put into practical use. For example, Patent Literature 1 listed below describes that content of a voice instruction is reflected in job setting, and Patent Literature 2 listed below describes that job history information intended by a user is narrowed down from a plurality of pieces of job history information on the basis of a keyword included in user voice.

### [Citation List]

### [Patent Literature]

[Patent Literature 1]
   Japanese Unexamined Patent Application Publication No. 2020-098383
[Patent Literature 2]
   Japanese Unexamined Patent Application Publication No. 2019-205052

### [Summary of Invention]

In a case where it is desired to cause an operation screen that is currently being displayed on an operation panel to transition to another operation screen, it is necessary to cause many operation screens to be displayed in the process of the transition by manual input operations in some cases. For example, in a case where it is desired to display a setting screen for a copy function when a setting screen for a scanner function is being displayed on the operation panel, it is necessary for a user to cause a function selection screen to be displayed once by a manual input operation. If it is not possible to smoothly move to a target operation screen in this manner, it takes time and effort for the user.

The present invention was made in view of the above circumstances, and an object thereof is to cause a display screen of a display device to immediately transition to a target operation screen on the basis of a voice instruction input as a voice input.

An image forming apparatus according to an aspect of the present invention is an image forming apparatus that includes an image forming device that forms an image on a recording medium, the image forming apparatus including: a display device; a display controller that causes the display device to display a selection screen for allowing a user to select a function to be executed from among a plurality of functions that are able to be executed in the image forming apparatus and causes the display device to display a setting screen for receiving an input related to setting of each function selected on the selection screen; a voice input device that receives an input of voice from the user; a receiver that receives a voice instruction based on the voice input to the voice input device; and a controller that executes a job in accordance with content of the voice instruction received by the receiver, in which in a case where the voice instruction is input to the voice input device when the display device is caused to display the selection screen, the display controller causes a display screen of the display device to transition from the selection screen to the setting screen for receiving an input of setting values indicated by the voice instruction and causes the setting screen to display the setting values indicated by the voice instruction.

According to the present invention, it is possible to cause a display screen of a display device to immediately transition to a target operation screen on the basis of a voice instruction input as a voice input.

### [Brief Description of Drawings]

FIG. 1 is a perspective view illustrating the exterior of an image forming apparatus according to an embodiment of the present invention.
FIG. 2 is a functional block diagram schematically illustrating main internal configurations of the image forming apparatus.
FIGS. 3(A) and (B) are diagrams illustrating an example of an operation screen displayed on a display device.
FIGS. 4(A) and (B) are diagrams illustrating an example of the operation screen displayed on the display device.
FIG. 5 is a diagram illustrating an example of the operation screen displayed on the display device.
FIG. 6 is a diagram illustrating an example of the operation screen displayed on the display device.
FIG. 7 is a flowchart illustrating an example of processing performed by a control device in the image forming apparatus.
FIG. 8 is a diagram illustrating an example of the operation screen displayed on the display device.

### [Description of Embodiments]

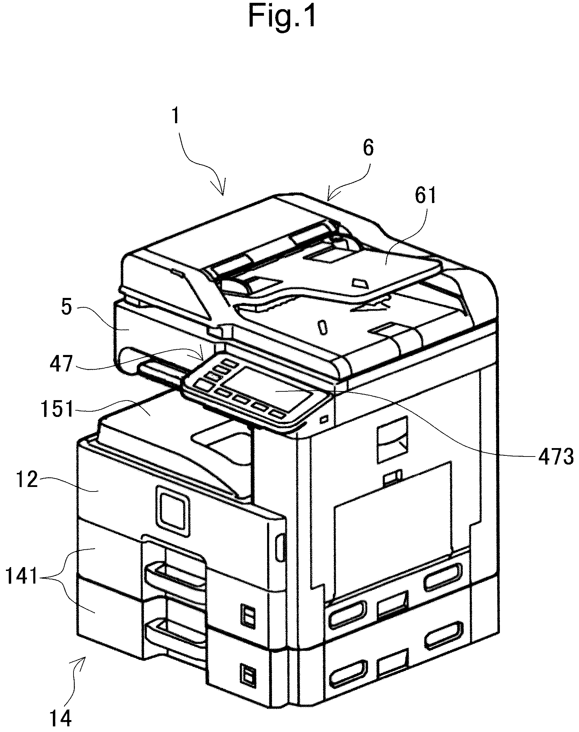

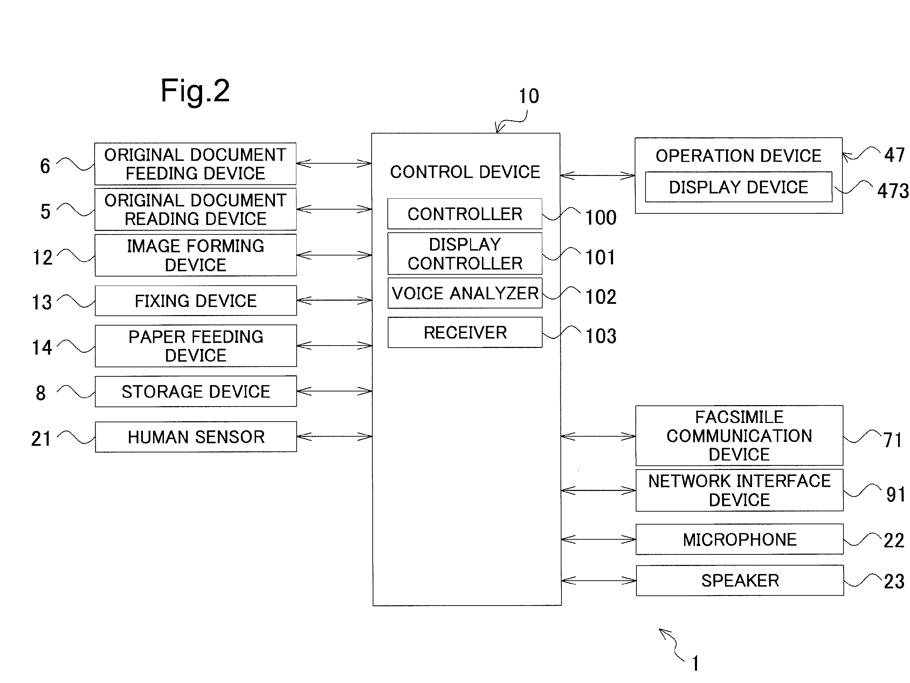

Hereinafter, an image forming apparatus according to an embodiment of the present invention will be described with reference to the drawings. FIG. 1 is a perspective view illustrating the exterior of the image forming apparatus according to the embodiment of the present invention. FIG. 2 is a functional block diagram schematically illustrating main internal configurations of the image forming apparatus. An image forming apparatus 1 according to a first embodiment is a multi-function machine that is equipped with a plurality of functions such as a copy function, a printer function, a scanner function, and a facsimile function, for example, and is configured to include an original document feeding device 6, an original document reading device 5, an image forming device 12, a fixing device 13, a paper feeding device 14, a storage device 8, a human sensor 21, an operation device 47, a facsimile communication device 71, a network interface device 91, a microphone 22, and a speaker 23.

An original document feeding device 6 is configured on an upper surface of the original document reading device 5 such that the original document feeding device 6 can be opened and closed with a hinge, which is not illustrated, and the original document feeding device 6 functions as an original document pressing cover in a case where an original document placed on a platen glass, which is not illustrated, is read. Also, the original document feeding device 6 is called an auto document feeder (ADF) or a document processor (DP), includes an original document placement tray 61, and supplies an original document placed on the original document placement tray 61 one by one to the original document reading device 5.

A case where the image forming apparatus 1 performs an original document reading operation will be described. The original document reading device 5 optically reads an image in the original document supplied to the original document reading device 5 by the original document feeding device 6 or the original document placed on the platen glass and generates image data. The image data generated by the original document reading device 5 is saved in an image memory or the like, which is not illustrated.

A case where the image forming apparatus 1 performs an image forming operation will be described. The image forming device 12 forms an image on a recording paper as a recording medium supplied from the paper feeding device 14 on the basis of the image data generated by the original document reading operation or image data received from a computer as an external device (a personal computer, for example) connected via a network.

The fixing device 13 is adapted to heat and pressurize the recording paper with a toner image formed thereon by the image forming device 12 and fix the toner image on the recording paper, and the recording paper on which the fixation processing has been performed is discharged to a discharge tray 151. The paper feeding device 14 includes a plurality of paper supply cassettes 141.

The storage device 8 is a large-capacity storage device such as a hard disk drive (HDD) or a solid state drive (SSD) and stores various control programs and the like.

The human sensor 21 detects a person approaching the image forming apparatus 1. As the human sensor 21, a sensor that detects infrared rays emitted from a human body, for example, is used.

The operation device 47 receives instructions such as an image forming operation executing instruction from an operator in regard to various operations and processing that can be performed by the image forming apparatus 1. The operation device 47 includes a display device 473 that displays an operation guide and the like for the operator. Also, the operation device 47 receives inputs of instructions from a user on the basis of operations (touch operations) performed by the user on an operation screen displayed on the display device 473 via a touch panel included in the display device 473 and operations performed by the user on physical keys.

The display device 473 is configured of a liquid crystal display (LCD) or the like. The display device 473 includes a touch panel. Once the operator performs an operation of touching a button or a key displayed on the screen, an instruction corresponding to the position where the touch operation has been performed is received by the touch panel.

The facsimile communication device 71 includes encoding/decoding and modulation/demodulation devices and a network control unit (NCU), which are not illustrated, and performs facsimile transmission/reception by using a public telephone network or the like.

The network interface device 91 is a communication interface that transmits/receives various kinds of data to and from an external device (a personal computer, for example) in a local area or on the Internet.

The microphone 22 is a voice input device that collects sound in the surroundings of the image forming apparatus 1 and converts the sound into an electrical signal (voice data). Note that the microphone 22 is provided at an appropriate location where it is easy to collect voice of an utterance of the user, for example, in the operation device 47.

The speaker (voice output device) 23 outputs various kinds of voice such as operation sounds and effect sounds when the operation device 47 is operated, guidance voice for explaining an operation method, and an alert sound in a case where some trouble occurs in the image forming apparatus 1. For example, the speaker 23 is provided at a location where the speaker 23 is not visible from the outside of the image forming apparatus 1, for example, inside the operation device 47.

The control device 10 is configured to include a processor, a random access memory (RAM), a read only memory (ROM), and a dedicated hardware circuit. The processor is, for example, a central processing unit (CPU), an application specific integrated circuit (ASIC), or a micro processing unit (MPU). The control device 10 includes a controller 100, a display controller 101, a voice analyzer 102, and a receiver 103.

The control device 10 is adapted to function as the controller 100, the display controller 101, the voice analyzer 102, and the receiver 103 by operations of the processor in accordance with a control program stored in the storage device 8. However, each of the controller 100 and the like can also be configured by a hardware circuit without depending on operations in accordance with the control program of the control device 10. Hereinafter, the same applies to each embodiment unless otherwise particularly stated.

The controller 100 is in charge of overall operation control of the image forming apparatus 1. The controller 100 is connected to the original document feeding device 6, the original document reading device 5, the image forming device 12, the fixing device 13, the paper feeding device 14, the storage device 8, the human sensor 21, the operation device 47, the facsimile communication device 71, the network interface device 91, the microphone 22, and the speaker 23 and performs drive control and the like on each of these components. For example, the controller 100 controls operations of the image forming device 12 and the like and causes an original document image obtained by the original document reading device 5 through reading to be formed on recording paper as a recording medium.

Also, once an approaching person is detected by the human sensor 21, the controller 100 controls the microphone 22 to bring the microphone 22 into an ON state to enable a voice input to the microphone 22, and if a predefined time (30 seconds, for example) elapses after the approaching person is no longer detected by the human sensor 21, the controller 100 controls the microphone 22 and brings the microphone 22 into an OFF state. Note that the ON/OFF switching of the microphone 22 can also be performed by the controller 100 in accordance with an instruction input to the operation device 47.

The display controller 101 controls display operations of the display device 473. For example, the display controller 101 displays, on the display device 473, a selection screen for allowing the user to select a function to be executed from among the plurality of functions that can be executed by the image forming apparatus 1 and displays, on the display device 473, a setting screen for receiving an input related to setting for each function selected on the selection screen.

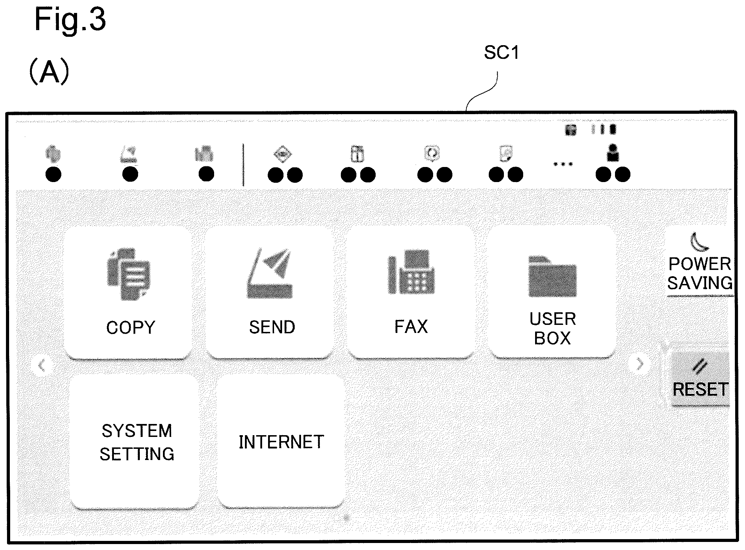

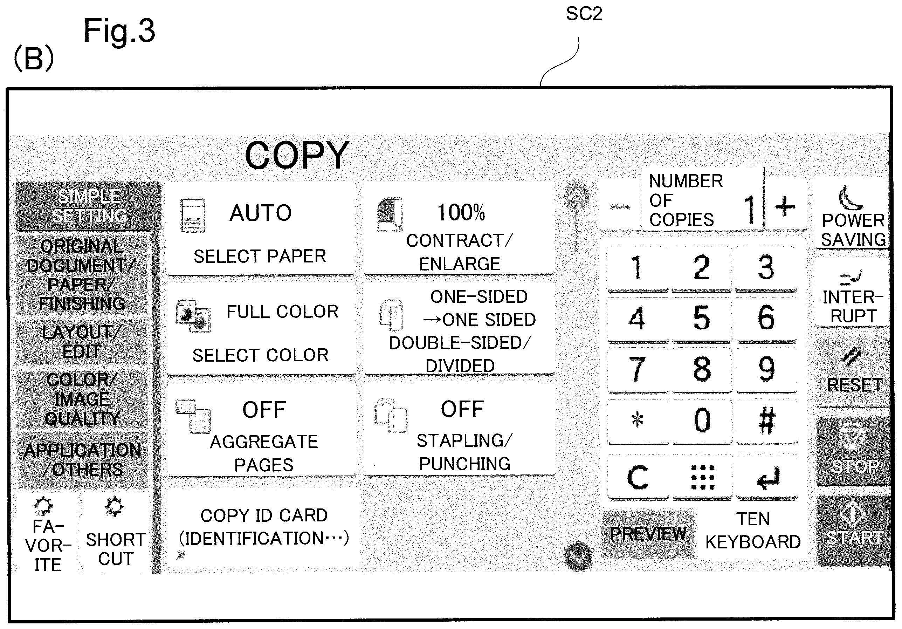

FIGS. 3(A) and (B) are diagrams illustrating examples of a screen displayed on the display device 473. An operation screen SC1 illustrated in FIG. 3(A) is a selection screen for allowing the user to select a function to be executed from among the plurality of functions that can be executed by the image forming apparatus 1. On the operation screen SC1, a "copy" button, a "send (scanner function)" button, a "fax (facsimile function)" button, and the like are displayed. Note that the operation screen SC1 of the above selection screen is also a home screen. Once the "copy" button is pressed by the user, the operation device 47 receives a copy function selection instruction, and the controller 100 causes the display device 473 to display an operation screen SC2 illustrated in FIG. 3(B) in response to the instruction.

The operation screen SC2 is displayed as a lower hierarchy than the "home" screen on the display device 473. The operation screen SC2 is a setting screen for receiving an input related to setting of the "copy" function. Six buttons with descriptions of "Select paper", "Select color", "Aggregate pages", "Contract/Enlarge", "Double-sided/Divided", and "Stapling/Punching" are displayed at the center of the setting screen for the "copy" function. These buttons are images for receiving settings related to the "copy" function.

Also, a button for receiving designation of favorite registration settings in which setting values that are different from default values are registered in advance is displayed below the above six buttons on the operation screen SC2. A description of "Copy ID card," for example, is applied to the button. "Copy ID card" is a function used when it is desired to copy both front and rear sides of an ID card such as a driver's license card or an insurance card side by side on one sheet of recording paper. Setting values that are different from default values such as "A6 (select paper)", "Color (Select color)", "2 in 1 (Aggregate pages)", "A6 (Original document size)", "Not set (Successive reading)", "Set (Erase outside of original document region)", and "Outer frame: 1 mm (Erase frame)" are registered in advance as settings for the "copy" function in the "Copy ID card." Therefore, once the user presses the "Copy ID card" button, an instruction to reflect the setting values that are different from the default in the copy function is input to the operation device 47 and is further received by the receiver 103.

The voice analyzer 102 converts the electrical signal (voice data) converted by the microphone 22 into text data by using an existing voice recognition technique, analyzes the text data by using an existing natural language processing technique, and thereby recognizes the voice instruction from the user.

The receiver 103 receives, as instructions from the user, the instruction input by a manual input operation via the operation device 47 (including a touch panel) on the screen that is currently displayed on the display device 473 and the voice instruction (an analysis result of the voice analyzer 102) recognized by the voice analyzer 102 via the microphone 22. The controller 100 executes a job in accordance with content of the instructions received by the receiver 103.

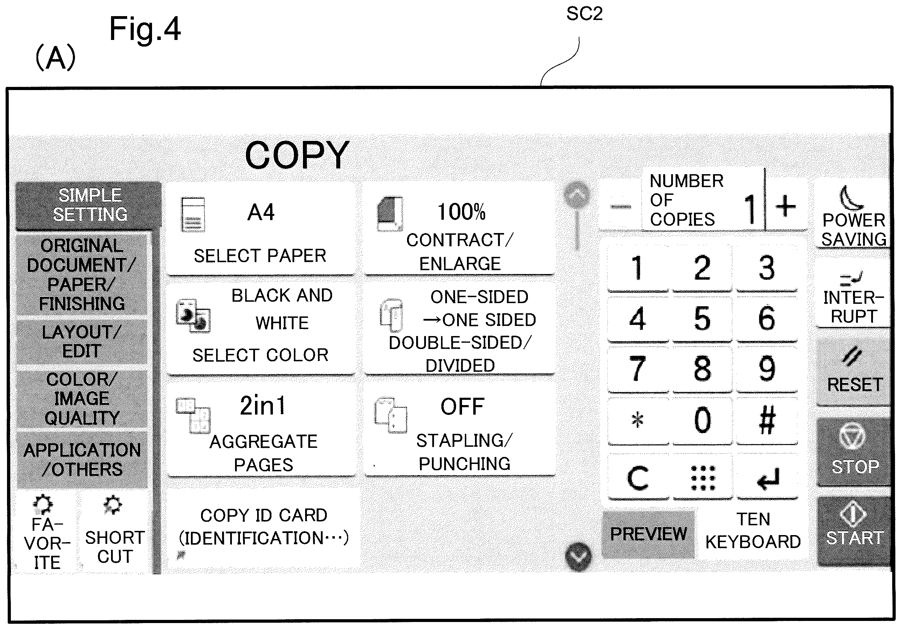

The display controller 101 displays, on the display device 473, a setting screen displaying content indicated by the instruction input by a manual input operation or the above voice instruction. For example, when the operation screen SC2 of the setting screen illustrated in FIG. 3(B) is displayed on the display device 473, the user inputs instructions to set "Select paper" to "A4", "Select color" to "Black and white", and "Aggregate pages" to "2 in 1" via the operation device 47, and the receiver 103 receives the instructions. At this time, the display controller 101 displays, on the display device 473, the operation screen SC2 (setting screen) that displays, in a switched manner, the setting for "Select paper" from "Auto" to "A4", the setting for "Select color" from "Full color" to "Black and white", and the setting for "Aggregate pages" from "Off" to "2 in 1" as illustrated in FIG. 4(A).

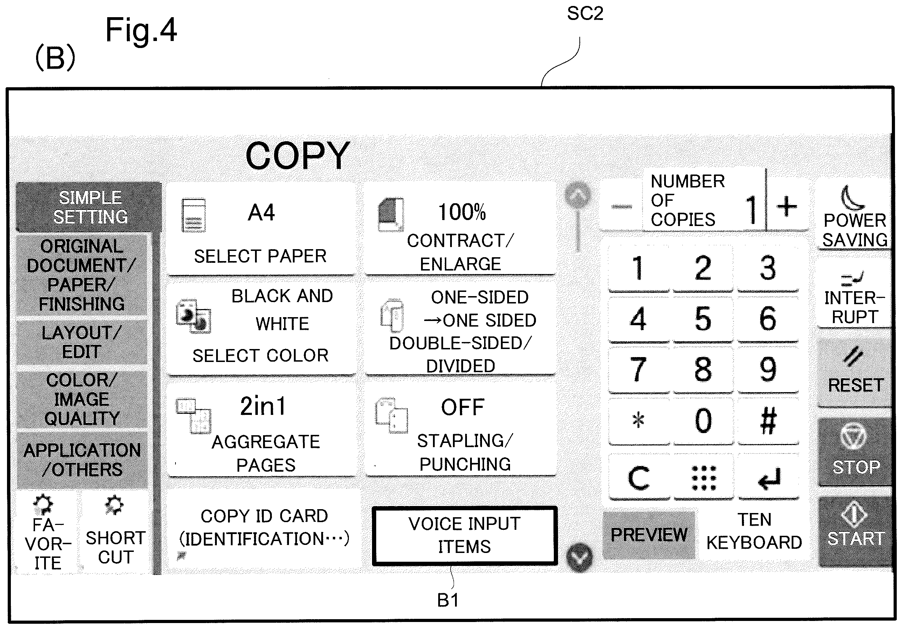

Also, if the user utters the keywords "A4", "Black and white", and "2 in 1" when the operation screen SC2 illustrated in FIG. 3(B) is displayed on the display device 473, and the receiver 103 receives the voice instructions via the speaker 23 and the voice analyzer 102, the display controller 101 displays, on the display device 473, the operation screen SC2, in which the setting for "Select paper" has been switched from "Auto" to "A4", the setting for "Select color" has been switched from "Full color" to "Black and white", and the setting for "Aggregate pages" has been switched from "Off" to "2 in 1" as illustrated in FIG. 4(B). The operation screen SC2 illustrated in FIG. 4(B) is different from the operation screen SC2 illustrated in FIG. 4(A) in that an operation button B1 with a description of "Voice input item" is displayed.

When an item output instruction is received by the receiver 103 via the operation device 47 in response to pressing of the operation button B1 on the operation screen SC2 illustrated in FIG. 4(B), the controller 100 controls voice output operations of the speaker 23 and causes the speaker 23 to output, as voice, content of the setting items set on the basis of the voice instructions. For example, voice of "A4, black and white, and 2 in 1 have been set by voice" is output from the speaker 23. Note that the receiver 103 also receives setting for setting items that are not displayed on the operation screen (setting screen) by voice instructions via the speaker 23 and the voice analyzer 102. The controller 100 also causes the speaker 23 to output, as voice, content of the setting items that are not displayed on the operation screen set on the basis of the voice instructions.

In regard to the voice instructions, accuracy of receiving of the instructions may be degraded unlike instructions input by manual input operations. Therefore, there may be a concern that the user worries about whether the setting values have been accurately received by the voice instructions. Particularly, the probability increases for setting that is not displayed on the display device 473 and is hidden. Since the user can confirm, through the voice, content of the setting values set by the voice instructions by outputting, as voice, the content of the setting made by the voice instructions in this manner, it is possible to reduce the above worry.

Also, the display controller 101 may cause the display device 473 to display the content of each setting value set on the basis of the voice instructions received by the receiver 103 when a confirmation instruction (output instruction) is manually input to the operation device 47 by the user and is received by the receiver 103, or the controller 100 may cause the content of each setting value set on the basis of the voice instructions to be output as voice when the confirmation instruction is input as a voice instruction via the microphone 22 and the voice analyzer 102 and is received by the receiver 103.

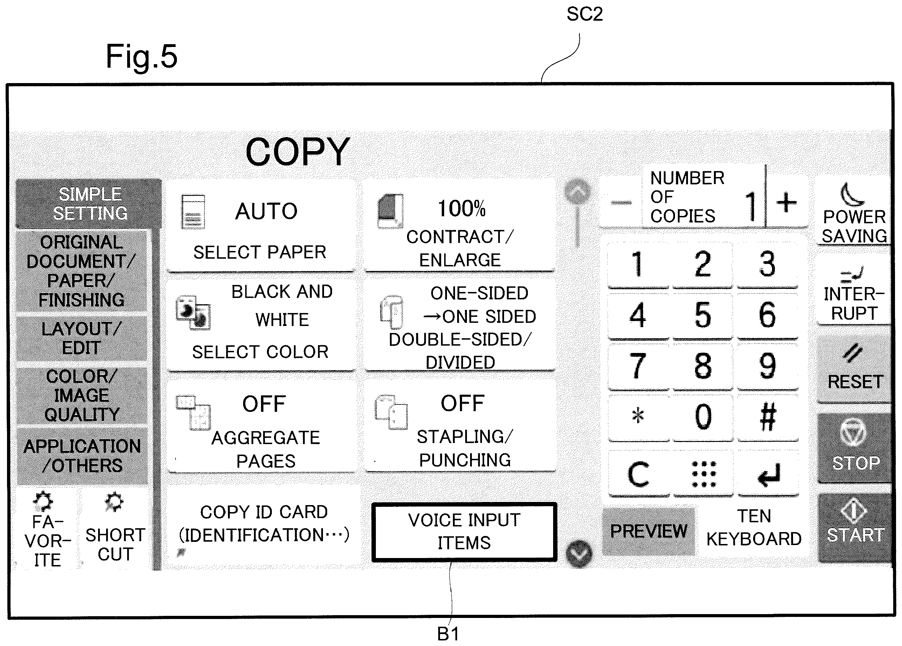

If the user utters the keyword "black and white copy" when the operation screen SC1 illustrated in FIG. 3(A) is displayed on the display device 473, a voice instruction of setting a setting value to "black and white copy" is received by the receiver 103 via the speaker 23 and the voice analyzer 102. In other words, if the voice instruction is input to the speaker 23 and the voice instruction is received by the receiver 103 via the voice analyzer 102 when the display device 473 is caused to display the operation screen SC1 that is the selection screen, the display controller 101 causes the display screen on the display device 473 to transition from the operation screen SC1 that is the selection screen to the operation screen SC2 that is the setting screen for the copy function to receive inputs of the setting values indicated by the voice instructions. Furthermore, the display controller 101 causes the operation screen SC2 to display the setting value indicated by the received voice instruction, "black and white copy" in this case as illustrated as an example in FIG. 5. Note that information regarding which of the functions each setting screen corresponds to and what kinds of setting value inputs each setting screen is adapted to receive is held in advance in a memory incorporated in the control device 10, for example, by an operation based on the control program. The display controller 101 specifies a setting screen for receiving inputs of setting values indicated by the voice instructions on the basis of the information.

Incidentally, in a case where the user utters the keyword "black and white" and the voice instruction is received by the receiver 103 when the operation screen SC1 of the selection screen illustrated in FIG. 3(A) is displayed on the display device 473, "black and white" indicated by the voice instruction is common to a plurality of functions, namely, the copy function, the scanner (send) function, and the facsimile (fax) function, and it is not possible to perform narrowing-down to one setting screen to receive the input of the setting value indicated by the voice instruction.

Thus, in a case where a setting value indicated by a voice instruction is common to a plurality of functions and it is not possible to perform narrowing down to one setting screen for receiving the input of the setting value indicated by the voice instruction, the display controller 101 does not perform the transition from the selection screen to the setting screen, does not display images indicating functions for which the setting value indicated by the voice instruction is not used on the selection screen, and displays only an image indicating each function for which the setting value indicated by the voice instruction is used.

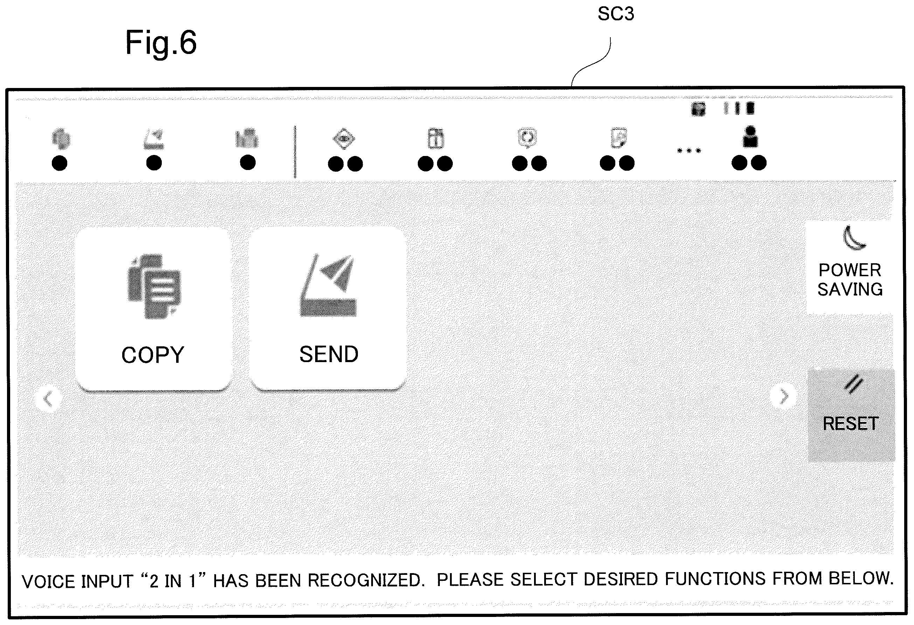

In a case where the user utters the keyword "2 in 1" and the voice instruction is received by the receiver 103, for example, it is not possible to perform narrowing-down to one setting screen to receive the input of the setting value indicated by the voice instruction while it is possible to perform narrowing-down to two functions, namely the copy function and the scanner function. Therefore, the display controller 101 causes the display device 473 to display an operation screen SC3 displaying only an image (button) indicating the copy function and an image (button) indicating the scanner function as illustrated in FIG. 6. In other words, the display controller 101 causes the display device 473 to display the operation screen SC3 (selection screen) in which images (buttons) indicating "fax", "user box". "system settings", and "Internet" as functions that are assumed not to be desired to be used by the user are not displayed.

Also, the receiver 103 applies setting values indicated by voice instructions as setting values for the favorite registration setting registered in advance as well. In a case where the user utters the keycode "Copy ID card" and the voice instruction is received by the receiver 103 via the voice analyzer 102 or by an operation of the operation device 47 when the operation screen SC2 is displayed, for example, each setting value that has been set in the favorite registration setting and is different from the default is changed to each setting value that has already been received by the voice instruction before that point and is then received.

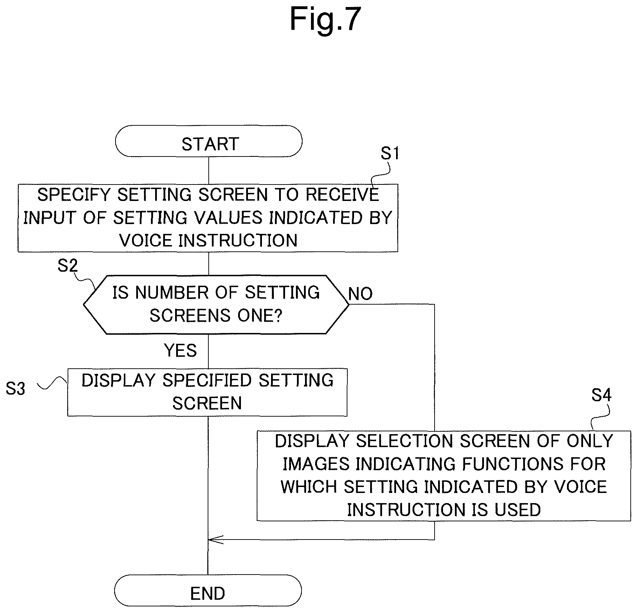

Next, an example of processing performed by the control device 10 of the image forming apparatus 1 will be described on the basis of the flowchart illustrated in FIG. 7. Note that the processing is processing performed when the voice analyzer 102 analyzes an electrical signal (voice data) converted by the microphone 22.

If a voice instruction is input to the speaker 23 and the voice instruction is received by the receiver 103 via the voice analyzer 102 when the display controller 101 causes the display device 473 to display the operation screen SC1 that is the selection screen, a setting screen for receiving an input of a setting value indicated by the voice instruction (a function to which the setting value indicated by the voice instruction is applied) is specified (S1).

Furthermore, the display controller 101 determines whether the number of such specified setting screens (functions) is one (S2). In a case where the display controller 101 determines that the number of specified setting screens (functions) is one (YES in S2), the display controller 101 causes the display device 473 to display the above specified setting screen (S3). Then, the processing ends.

On the other hand, in a case where the display controller 101 determines that the number of specified setting screens (functions) is not one (NO in S2), the display controller 101 does not perform transition from the selection screen to the setting screen, does not display images indicating the functions for which the setting value indicated by the voice instruction is not used, and causes only an image indicating each function for which the setting value indicated by the voice instruction is used to be displayed, on the selection screen (S4). Then, the processing ends.

In this manner, even in a case where a setting value used commonly to a plurality of functions is input as voice, guidance is given to the user by the display narrowed down to the functions to which the setting values input as voice is applied in the present embodiment. Therefore, the user can more easily select a setting screen necessary to input a setting value that the user desires to set.

Note that the when operation state information indicating that an operation mechanism included in the image forming apparatus 1 has operated is acquired, the display controller 101 may cause the display screen on the display device 473 to transition to a setting screen for receiving an input of a setting value for a function associated with content of the operation state information in advance from among the plurality of functions for which the setting value indicated by the voice instruction is used.

For example, the display controller 101 acquires opening/closing detection information from an opening/closing switch which detects opening/closing of the original document feeding device 6 and is not illustrated in the drawing when there are multiple functions for which the setting value indicated by the voice instruction is used, namely the copy function and the scanner function, and the display controller 101 causes the display device 473 to display a setting screen to receive an input of a setting value for the scanner function associated in "open" information in advance in a case where the opening/closing detection information indicates "open" or causes the display device 473 to display a setting screen to receive an input of a setting value for the copy function associated to "close" information in advance in a case where the opening/closing detection information indicates "close".

Also, the controller 100 may cause the speaker 23 to output content of setting values indicated by voice instruction every time the voice instruction is received by the receiver 103. Alternatively, the controller 100 may cause the speaker 23 to collectively output content of the setting values indicated by the voice instructions as targets of display when the operation screen SC2 as the setting screen that displays the setting values indicated by the voice instruction is displayed.

Note that in a case where the speaker 23 is caused to output the content of the setting values indicated by the voice instructions in this manner, and the number of setting values to be output as voice becomes excessively large, it is rather difficult for the user to know the content of the setting values.

Thus, in a case where the number of setting values to be output as voice is equal to or greater than a predefined number (five, for example), the controller 100 does not cause the content to be output as voice and causes the speaker 23 to output a predefined alert message as voice in a further embodiment. For example, the controller 100 causes the speaker 23 to output voice saying "please confirm the setting values on the screen".

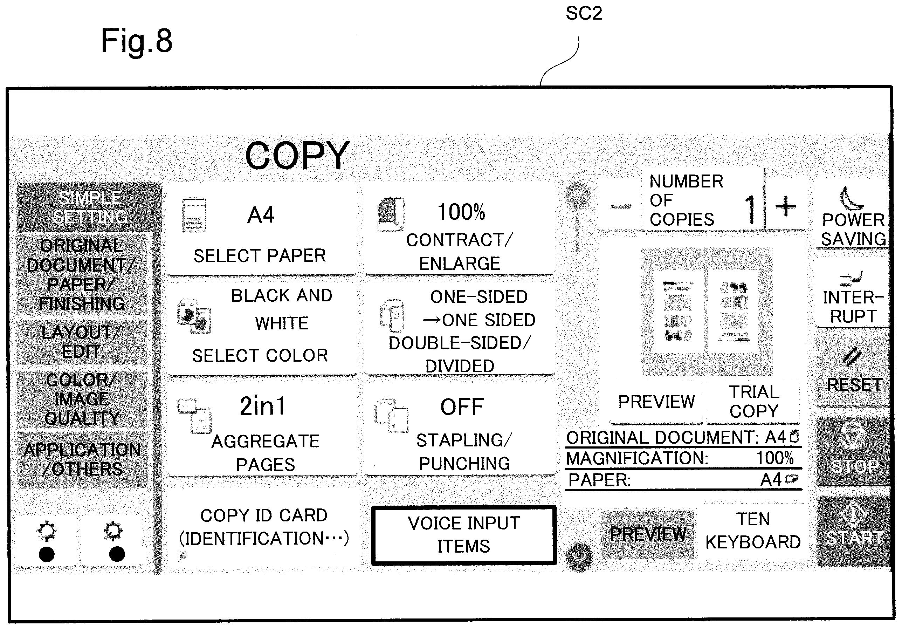

Also, the display controller 101 may cause the display device 473 to display, on the setting screen, a preview image on an assumption that the controller 100 has executed a job with the setting values indicated by the voice instruction applied in a further embodiment. **In** this manner, it is possible to confirm whether the setting values indicated by the voice instruction have been accurately received and an expected result achieved in a case where the setting values indicated by the voice instruction are applied before execution of the job as illustrated as an example in FIG. 8.

Note that although the case where voice data collected by the microphone 22 and converted is analyzed by the voice analyzer 102 in the image forming apparatus 1 has been described hitherto, a speaker that is called a smart speaker, incorporates a microphone therein, and has an artificial intelligence (AI) assistant function may be employed, user's voice may be collected by the speaker, and the image forming apparatus 1 may use the speaker as a voice input device and receive, by the receiver 103, a voice analysis result from the speaker as setting values in a further embodiment.

The present invention is not limited to the configurations of the above embodiments, and various modifications can be made. Also, in regard to the above embodiments, the configurations and the processing illustrated in the embodiments by using FIGS. 1 to 8 are only some embodiments of the present invention, and the present invention is not intended to be limited to the configurations and the processing.

## Claims

1. An image forming apparatus that includes an image forming device that forms an image on a recording medium, the image forming apparatus comprising:
a display device;
a display controller that causes the display device to display a selection screen for allowing a user to select a function to be executed from among a plurality of functions that are able to be executed in the image forming apparatus and causes the display device to display a setting screen for receiving an input related to setting of each function selected on the selection screen;
a voice input device that receives an input of voice from the user;
a receiver that receives a voice instruction based on the voice input to the voice input device; and
a controller that executes a job in accordance with content of the voice instruction received by the receiver,
wherein in a case where the voice instruction is input to the voice input device when the display device is caused to display the selection screen, the display controller causes a display screen of the display device to transition from the selection screen to the setting screen for receiving an input of setting values indicated by the voice instruction and causes the setting screen to display the setting values indicated by the voice instruction.

2. The image forming apparatus according to claim 1, wherein if the setting values indicated by the voice instruction are commonly used for a plurality of functions in a case where the voice instruction is input to the voice input device when the display device is caused to display the selection screen, the display controller does not perform the transition, does not display images indicating functions for which the setting values indicated by the voice instruction are not used on the selection screen, and causes an image indicating each function for which the setting values indicated by the voice instruction are used to be displayed.

3. The image forming apparatus according to claim 2, wherein when operation state information indicating that an operation mechanism included in the image forming apparatus has operated is acquired, the display controller causes the display screen of the display device to transition to the setting screen for receiving an input of setting values for functions that are associated in advance with content of the operation state information from among the functions for which the setting values indicated by the voice instruction are used.

4. The image forming apparatus according to claim 1, further comprising:
a voice output device,
wherein the controller further causes the voice output device to output content of the setting values indicated by the voice instruction.

5. The image forming apparatus according to claim 4,
wherein the receiver also receives setting for setting items that are not displayed on the setting screen through a voice instruction based on voice input to the voice input device, and
the controller also causes the voice output device to output, as voice, content of the setting items that have been set on the basis of the voice instruction and are not displayed on the setting screen.

6. The image forming apparatus according to claim 4, further comprising:
an operation device that receives an instruction as a manual input from the user,
wherein when an output instruction is input as a manual input to the operation device and is received by the receiver, the display controller causes the display device to display content of each of the setting values set on the basis of the voice instruction received by the receiver, and
when an output instruction is input through a voice instruction based on voice input to the voice input device and is received by the receiver, the controller causes the voice output device to output, as voice, content of setting items set on the basis of the voice instruction.

7. The image forming apparatus according to claim 4, wherein in a case where a number of setting values indicated by the voice instruction is equal to or greater than a predefined number, the controller does not cause the voice output device to output the content of the setting values indicated by the voice instruction and causes the voice output device to output a predefined alert message.

8. The image forming apparatus according to claim 1, wherein the display controller causes the display device to display, on the setting screen, a preview image on an assumption that the job has been executed with the setting values indicated by the voice instruction applied.

9. The image forming apparatus according to claim 1, further comprising:
an operation device that receives an input of an instruction based on an operation of the user,
wherein when a confirmation instruction is input to the operation device, the display controller causes the display device to display the setting values indicated by the voice instruction received by the receiver.

10. The image forming apparatus according to claim 1, wherein the receiver further receives the setting values indicated by the voice instruction as setting values for favorite registration setting in which setting values that are different from default values are registered in advance.
